# EUROPEAN PATENT SPECIFICATION

(11) **EP 3 185 697 B1**
(45) Date of publication and mention of the grant of the patent: **01.01.2020**
(21) Application number: 14900756.9
(22) Date of filing: 25.08.2014
(51) Int. Cl.: A23L 3/015, A23C 3/00, A23L 2/42, A23L 3/00

(54) **PROCESS TO INCREASE THE STORAGE TIME OF LIQUID RAW FOOD**
VERFAHREN ZUR VERLÄNGERUNG DER LAGERUNGSZEIT VON FLÜSSIGEN ROHEN LEBENSMITTELN
PROCÉDÉ POUR AUGMENTER LA DURÉE DE STOCKAGE D'UN ALIMENT CRU LIQUIDE

(43) Date of publication of application: 05.07.2017
(73) Proprietor: Duarte Vieira, Francisco José, 30350-620 Belo Horizonte - MG (BR)
(72) Inventor: Duarte Vieira, Francisco José, 30350-620 Belo Horizonte - MG (BR)
(74) Representative: Ballester Cañizares, Rosalia
(86) International application number: PCT/BR2014/000295
(87) International publication number: WO 2016/029279

(56) References cited:
- EP-A1- 2 572 592
- WO-A1-02/03816
- WO-A1-2006/067604
- WO-A1-2014/064385

## Description

### Technical field of the invention

The present invention is related to increase the storage time of liquid raw food by reducing both extracellular enzyme content and the microbial load through processing under temperatures lower than those used in such processes as Ultra High Temperature (UHT) and pasteurization. It is also an application of the present invention to reduce the loss of organoleptic properties while processing liquid raw food.

### State of the art

With regards to obtaining and preserving liquid raw food, such as milk and fruit juice, the State of the Art encompasses hygiene, fast cooling, transportation and storage of the product under low temperature in as short a time as possible. The liquid raw food is subjected to a fast-cooling process aimed at reducing the metabolic speed and reproduction of contaminating microorganisms, thereby reducing the amount of extracellular enzymes secreted by such organisms, and the speed at which such enzymes and this liquid's natural enzymes act upon the nutritional substrates comprising such liquid.

The reduction of the microbial and enzymatic load should happen in as short a time as possible after obtaining such liquid foods as milk and fruit juice, a process that can only be accomplished at industrial facilities named plants.

In order to ensure compatibility between the rate at which raw materials are provided by a network of suppliers and the characteristics of these plants continuous process equipment liquid raw food must be cold stored.

With regards to supplying the consumer market with packaged liquid food with increased shelf life in relation to production and consumption time, the market is led by thermal preservation processes of which the Ultra High Temperature (UHT) comes out on top and pasteurization in second place.

In addition to reducing the bacterial load by up to 99% and eliminating pathogenic microorganisms and partially deactivating sugar-fermenting, proteolytic and lipolytic extracellular enzymes, milk pasteurization under temperatures ranging from 75° C and 95° C also partially preserves such natural organoleptic properties as color and taste, but it generates short shelf life products that require transport and maintenance under low temperatures with increased logistics cost.

UHT treated liquid food - under temperatures up to 142° C for a few seconds - are immediately aseptically packaged to ensure long shelf life under ambient temperature; as no refrigeration is needed, logistic costs are reduced.

High temperatures used in thermal processes are essential for:
1.- causing the death of thermal-resistant vegetative forms and spores of product contaminating microorganisms;
2.- deactivating extracellular enzymes because when these are left active in processed food, they keep on acting upon the food for the whole-time comprising production and consumption.

High temperatures lead to the loss of both nutritional factors and food organoleptic properties, such as colour, taste and smell, all of which customers highly value.

In an attempt to reduce the loss of nutritional and natural organoleptic components of liquid food, which inevitably happens to thermal technologies, other technologies featuring less thermal impact have been proposed, aimed at preventing liquid food from being subject to microbial action.

In one of such cases, Patent GB-294502, published on July 7, 1928, discloses an electromagnetic irradiation process, both visibly and in the ultraviolet spectrum, on liquid food, formed in thin films, aimed at causing the death, through irradiation, of microorganisms responsible for contaminating such liquid food. The vacuum, whether or not used in the process, is of low magnitude and aims only at reducing the density of generated vapours in order to allow for greater penetration of radiation on the liquid being treated.

Today two non-thermal processes for reducing or eliminating food contaminating microbial load are being used:
1.- Ultrafiltration membrane
2.- High Pressure Process (HPP) through which pressures of up to 6.000 bar are applied on liquid food inside special polymer packages.

A Patent Application BRP11002602-9, filed on 05/21/10 and published on 02/07/12 comprises the process for ensuring the sterilization of liquid food under rather low temperatures, close to the freezing points of the food being treated; due to the low temperatures used in such a process, all enzymes and nutritional molecules that would typically be deactivated by thermal processes, either in whole or in part, are kept active, with the organoleptic characteristics of such food being preserved.

In a preferred embodiment, Patent Application BRPI-1002602-9 shows a process for cold sterilization of liquid food, using temperatures ranging from the freezing points of such food and 5°C, with such liquids being previously subjected to gasification through nitrogen, air or any other type of gas normally used by the food industry, such as carbon dioxide, under pressures of up to 200 kg/cm² with gasified liquids being subsequently subjected to an abrupt and great pressure reduction as they are poured into decompression tanks with as low an internal pressure as 0.01 kg/cm², something that can be accomplished by the quick elevation of a piston inside the tanks; in another embodiment, pre- gasified liquids under pressures of up to 200 kg/cm² are poured into the tanks through injection nozzles, with the pressure within the tanks being kept below the atmospheric pressure by means of gas exhausters.

In the process description provided in Patent Application BRPI-1002602-9, the microorganisms in liquid food that were previously gasified under a pressure of 200 kg/cm², with temperatures lower than 5° C, have their cells insufflated by gases and explode upon being subjected to an abrupt and great expansion due to low pressure - 0.01 kg/cm²- that prevails in the decompression tank, thereby causing the death of such microorganisms.

The preferred embodiment of Patent Application BRPI-1002602-9 comprises a solution that poses two serious problems:
First - cost-ineffective equipment and maintenance, frequent outages and low production capacity;
Second - the equipment works in expansion and compression cycles; in the event of minor leakages in both the injection nozzles and piston o-rings at the moment the piston is in its lowermost position, the pressure within the expansion tank is not sufficiently low, and this may cause gas-insufflated microorganisms to slowly lose their gases, that is to say, without exploding, thereby contaminating the inside of the equipment that, in turn, contaminates the production being handled even before such a difficult-to-detect failure is identified.

Regarding the above embodiment, even large size blowers and exhausters are not capable of reducing internal pressure, through suction, to values below 0.5 bar.

### Description of the invention

Both the process and equipment described here (the equipment is not part of the invention) aim to allow for an increased storage time of liquid raw food, thereby making it possible to eliminate fluctuations between supply and the continuous processing of such food; its application also makes it possible to decrease the microbial load in liquid food and, at the same time, if so desired, it further allows for reducing the enzyme content in said liquid, in addition to being conducted under temperatures ranging from 6° C to 50° C, which are lower than the temperatures used in pasteurization that requires even lower temperatures when compared to the UHT process.

### I - The process comprises three sequential steps:

First - the first step is to gasify the liquid food, under temperatures ranging from 6° C and 50° C, compressing it with nitrogen or with a nitrogen and carbon dioxide mixture, the mixture being nitrogen with a carbon dioxide content between 1 % to 10% by volume, under pressures ranging from 250 bar to 500 bar.
Second - the second step consists of leaving the so gasified liquid to rest in tanks for three hundred seconds, under a given pressure between 250 bar and 500 bar.
Third - the third step consists of pouring this liquid, now as a mist, a state that is accomplished using a 60° dispersion angle misting nozzle, onto both the central and upper portion of a cone-shaped decompression tank, with its base turned upside down; part of the gases that break free from the liquid being treated recirculate inside this tank as they are driven by a turbine that aspirates them through the upper portion of the tank in order to inject them tangentially on the vertex of the internal cone, thereby forming a cyclone of gases in whose centre, or "hurricane eye", the pressure is preferably 0.2 bar; preferably the other portion of the gases returns to the compression as shown in the first step of the process.

The temperatures at which the liquids can be processed - between 6° C and 50° C - are determined together with the compositions of the gases that will be selected for each process:
- pure nitrogen, when only the microbial load needs to be reduced, or
- nitrogen with a carbon dioxide content between 1 % and 10% to lower the liquids' enzyme content, with a nitrogen and carbon dioxide mixture being used to deactivate the enzymes in the first two steps of the process: gasification and rest.

The first two process steps - gasification under pressure between 250 and 500 bar and a 300-second hold time under the selected pressure - also lead the cytoplasm of contaminating micro-organisms to be insufflated with gas under high pressure, and the 300-second hold time is considered enough to reduce the enzyme content.

If nitrogen is used as the sole process gas, the pressure and temperatures that take place in the process will have no impact on the extracellular enzymes; however, if the aforementioned nitrogen and carbon dioxide mixture is used, in addition to lowering the pH, combined with the rest period and a process temperature between 6° C and 50° C, the enzyme content of the liquid food being treated will be decreased.

The third process step consists of releasing the gasified liquids, under a pressure between 250 bar and 500 bar, now as a mist, onto the central and upper portion, which is where the lowest pressure is found inside the ascending cyclone that is formed from the base of the cone-shaped expansion vessel, with its base turned upside down.

In the upper portion centre of this ascending cyclone, or in the "hurricane eye", the pressure is preferably kept at 0.2 bar, and this causes a great and an abrupt expansion of the inflated gases inside microorganism cells that were thrown in there in the form of mist, making them to explode and die as the gases inflated inside these organisms are subjected to an instantaneous decompression that may reach 2500 times the gaseous volumes inflated under pressure, and this expansion can be calculated by the quotient between gasification and expansion pressure; for instance, considering a gasification pressure of 500 bar and the expansion tank's pressure set at 0.2 bar, the expansion rate of gases would be 2500 times. The term "abrupt expansion of gases" refers to the fact that the explosion and subsequent death of microorganisms only takes place if gas expansion is triggered instantly, which only happens when gasified liquids are released under very high pressure inside the vessel, whose internal pressure has been greatly reduced.

The sudden explosion of gas-insufflated microorganisms, due to the abrupt decompression of gasified liquid food under the previously-referenced pressure and temperature, reaches all microorganisms; therefore, the process is generic, such as pasteurization, i.e., it does not depend on the liquids' properties, but rather the microorganisms' characteristics.

Reducing enzyme content depends on the chemical activity of the gases in the liquid being treated; the degree of enzyme content reduction obtained in the process is a function of the combination of the following variables:
A.- high pressure of the liquids resulting from gas insufflation;
B.- chemical reactivity of the nitrogen and carbon dioxide mixture, owing to a CO₂ content between 1 % and 10% by volume, which lowers the solution's pH;
C.- the gasified liquids' temperature between 6° C and 50° C; and
D.- a 300-second hold time for the gasified liquids under the recommended temperatures, pressures and carbon dioxide contents.

Therefore, the process of the present patent reduces the microbial load that contaminates processed liquids and, at the same time, if so desired, also reduces enzyme content under lower temperatures than those used in thermal methods, thereby partially preserving the natural organoleptic properties of such liquids and increasing the storage time of raw food, due attention being given to what follows:
1 - this process can only be applied to fresh milk if nitrogen is the only gas used in the process, no mixture of carbon dioxide being allowed as its presence lowers the pH level, which is harmful to milk; under such conditions, the process reduces the number of colony-forming units (CFU) in the milk and does not act upon extracellular enzymes.
2 - it applies to citrus fruits, pineapple, Barbados cherry and other liquids extracted from different vegetables, with both the pH and process temperature not interfering with industrial enzymes added to liquids, aimed to reduce the viscosity of the same and prevent the gelification of such juices when cooled.

### Brief description of the drawings.

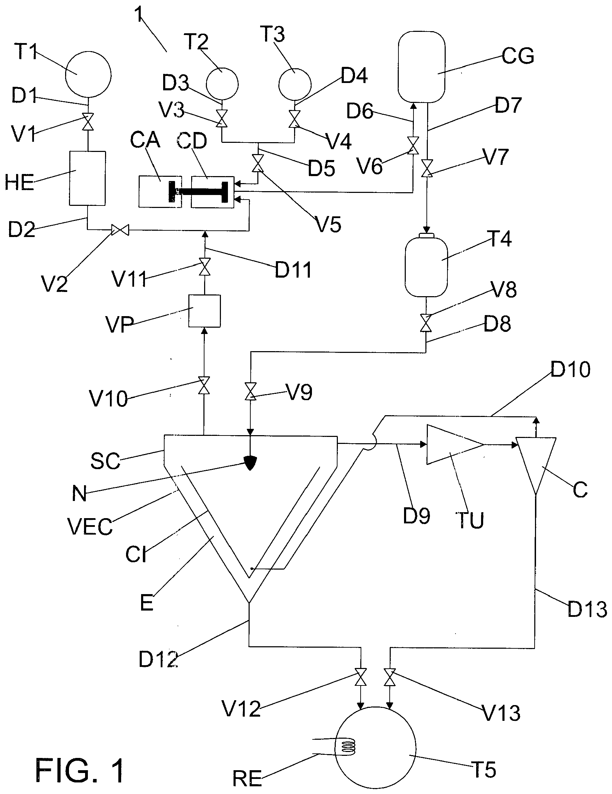

Figure 1 shows a schematic view depicting pieces of equipment used in the process and equipment for increasing storage time of liquid raw food (1); figure 1 does not show conventional pressure and temperature sensors, nor the pipes for draining and washing the equipment as these are considered standard devices used in processing liquid food and, therefore, are not part of the claims included herein; the process is software-controlled and valves are either pneumatic or electricity-powered.

### Description of a preferred embodiment of the invention

Figure 1 shows the tank for liquids to be treated (T1); the nitrogen supply tank (T2); the carbon dioxide supply tank (T3); the rest tank (T4); valves (V1), (V2), (V3), (V4), (V5), (V6), (V7), (V8), (V9), (V10), (V1 1), (V12) and (V13); the dosing cylinder (CD); the actuating cylinder (CA); the heat exchanger (HE); the gasification compressor (CG); the ducts (D1), (D2), (D3), (D4), (D5), (D6), (D7), (D8)and (D9), (D10), (D11), (D12) and (D13); the vacuum pump (VP); the cyclone expansion vessel (VEC), featuring its cylindrical section (SC) and its internal cone (CI); the misting nozzle (N); the turbine (TU); the gas-liquid separator cyclone (C), and the tank for finished products (T5) and its internal refrigerator device (RE).

The process works in the following way.

The following are previously defined by the software:
1 - the temperature and pressure under which the process is to be conducted;
2 - the hold time, and
3 - which gas shall be used in the process, for example, pure nitrogen, or which nitrogen-carbon dioxide proportion shall be used.

The dosing cylinder (CD) aspirates and doses the flow of the liquid being treated, which is in the tank for liquids to be treated (T1) that flow through the valve-controlled (V1) duct (D1), up to the heat exchanger (HE) that may be used as a cooling or heating device and that will keep the liquid to be treated under the specified temperature for the process; the liquid to be treated exits the heat exchanger (HE) through the duct (D2) and, controlled by the valve (V2), it is aspirated by the dosing cylinder (CD) that is driven by the driving cylinder (CA); in addition to providing the dosage, the dosing cylinder (CD) concomitantly aspirates the gases contained inside the nitrogen supply tank (T2) or in the carbon dioxide supply tank (T3), or in both of them, whose gas exhaust for the process flow through ducts (D3) and (D4), respectively, and are controlled by valves (V3) and (V4), respectively, which are connected with the gas feeding duct (D5), from which, controlled by valve (V5), the gas is supplied in a pure or mixed state, and is dosed by the aspiration cycle of the dosing cylinder (CD) that is driven by the driving cylinder (CA); therefore, the liquid to be treated and the gas to be used in the treatment - whether pure nitrogen or a mixture of nitrogen and carbon dioxide with contents ranging from 1 % to 10% by volume - are aspirated and dosed by the dosing cylinder (CD) and then, upon compressing both liquid and gas, sends them through the duct (D6), controlled by valve (V6), to the gasifying compressor (CG); valves (V5) and (V7) shall be closed and valve (V6) shall be open for this operation involving sending the liquid mixture to be treated, along with the process gas, to the gasifying compressor (CG).

The gasifying compressor (CG) is a device available in the market and is used in liquid food homogenization; it can be a multiple stage or a single hydraulic cylinder compressor.

Figure 1 further shows that when the gasifying compressor (CG) compresses the process mixture of liquid and gas, the gasified liquid exits the gasifying compressor (CG), under the specified pressure for this operation, through the duct (D7), controlled by valve (V7), and heads for the rest tank (T4) where it is to stay for three hundred seconds in order to complete the required time for chemical reactions to take effect aimed at reducing enzyme content; for this operation, valve (V7) must be opened, and valves (V6) and (V8) must be closed.

The rest tank's (T4) volume is calculated as a function of the capacity of the gasifying cylinder (CG) so that as the gasified liquids enter this tank it rapidly reaches the process pressure; the liquids are set to rest, under the specified pressure for the process, for as long as it has been defined.

As the time allowed for the gasified liquid to remain at rest inside the rest tank (T4) comes to an end, and as the internal pressure (T4) reaches the process pressure, valve (V8) opens up and the gasified liquid drains through the duct (D8) and then, controlled by valve (V9), they are injected by the misting nozzle (N) into the cyclone expansion vessel (VEC) in the form of mist.

The misting nozzle (N) sprays the liquids in the form of a cone with a 60° opening that is placed on the vessel's central upper portion, where the operational pressure is 0.2 bar.

The microbial load reduction of liquids being treated can happen if and only if:
A - the liquid being treated is gasified under the specified pressure for each process, between 250 bar and 500 bar, by the gasifying compressor (CG), and, under such pressure, is kept inside the rest tank (T4) for as long as specified, under the temperature and pressure set forth for each liquid;
B - the cyclone expansion vessel (VEC) pressure in the central and upper portion of the cyclone expansion vessel, by function of the gases-based cyclone formed therein, is under a pressure of 0.2 bar.

Only upon meeting these conditions the automatic instrumentation of the equipment allows the equipment starts the operation; valve (V9) regulates the flow of the liquid being treated that comes to the misting nozzle (N), as per instructions provided by the software; otherwise, during the course of operation of the equipment, said valve causes the liquids to diverge to the reprocessing line using a specific pipeline that, in addition to being conventional it is typically used by the liquid food industry, that being the reason why it was not included in Figure 1 and is not part of the claims included herein.

As the process goes even further, the turbine (TU) aspirates the mist and the gases released from the liquid being treated at the cylindrical section (SC) on top of the cyclone expansion vessel (VEC), and injects them into the gases and liquids separator cyclone (C); the gases captured on top of the gases and liquids separator cyclone (C) are then forced by the turbine (TU) into the duct (D10), located right above the internal cone's (CI) vertex, tangentially to the internal wall of the internal cone (CI), thereby giving rise to the formation of an ascending cyclone of gases inside such vessel that, upon reaching the upper portion of the internal cone (CI), will make sure that the process pressure in the centre of the cyclone is 0.2 bar; from the base of the gases and liquids separator cyclone (C), the liquids that are separated from the process gases flow through duct (D13), controlled by (V13), all the way to the processed products tank (T5); part of the liquids being processed that, due to the cyclone gases that are formed inside the cyclone expansion vessel (VEC), are thrown against the walls of the cylindrical section (SC) of said vessel, drain through the space (E) between the internal walls of the cyclone expansion vessel (VEC) and the external cone (CI), and then exit the vessel through the duct (D12) placed on the vertex of the walls' cone that make up the cyclone expansion vessel (VEC), and flow, through valve (V12), to the processed products tank (T5) with its refrigerator device (RE) inside.

Figure 1 also shows that the gases insufflated in the liquids being treated recirculate in the process through two circuits:
First - process gases that were separated from the liquid and exited from the top of the gases and liquids cyclone separator (C) return to the base of the inner cone (CI) of the cyclone expansion vessel (VEC), powered by the turbine (TU), to create an ascending fluid cyclone.
Second - part of the gases escaping from the gasified liquids are collected at the top of the cyclone expansion vessel (VEC) and return through the vacuum pump (VP), which aspirates the gases and reinject them, by means of (V10) and (V1 1) valves, located in duct (D2), which is the inlet duct for the liquid being treated, and the gases follow along with these liquids into the injector cylinder (CD), thereby carrying out the recirculation of process gas applied to the gasification of the liquid being treated.

The vacuum pump (VP) is a conventional vacuum pump whose function is to reduce the volume of gas collected at the top of the expansion vessel, under low pressure, and adjust its volume to the operating conditions of the dosing cylinder (CD).

As a small part of process gases leaves the equipment in solution form with the treated liquids, replacement is handled through the software, based on simple parameters such as operating time and temperature, which acts on the gas supply valves and the dosing cylinder (CD). The purpose of the process and equipment, object of this patent, is to increase the storage time of raw products inside the plants in order to balance the supply of raw material to the continuous production process, in which case an increase of 96 hours in the raw products' storage time will be more than sufficient.

The object of this patent was applied in laboratory tests and showed that orange juice samples treated by this process, under a temperature of 20° C and a pressure of 250 bar, using nitrogen as a process gas with 1% carbon dioxide by volume, with a hold time of 300 seconds and maintained at 10° C in storage containers without contact with atmospheric air, showed no signs of colony growth or formation of fermentation gases nor gelation for a period of 7 days after treatment; separation into two phases was easily reversed by mechanical agitation inside the containers. Test results indicate that higher gasification pressures of the process gases, higher temperatures, higher percentages of CO₂ in the process gas with the same value of low-pressure expansion, and equal amount of "hold time" will cause greater increases in storage time.

## Claims

1. A process to increase the storage time of liquid raw food to allow for an increased storage time of liquid raw food, thereby making it possible to eliminate fluctuations between supply and the continuous processing of such food, decreasing the microbial load in liquid food and, at the same time, if so desired, it further allows for reducing the enzyme content in said liquid, **characterized by** gasifying the liquid food and then giving an instantaneous decompression, the process being conducted under temperatures ranging from 6° C to 50° C and by the fact that the process comprises three sequential steps:
a. the first step is to gasify the liquid food, under temperatures ranging from 6° C and 50° C, compressing it with nitrogen or with a nitrogen and carbon dioxide mixture, the mixture being nitrogen with a carbon dioxide content between 1 % to 10% by volume, under pressures ranging from 250 bar to 500 bar;
b. the second step consists of leaving the so gasified liquid to rest in tanks, under a given pressure between 250 bar and 500 bar for at least 300 seconds; and
c. the third step consists of pouring this liquid, now as a mist, a state that is accomplished using a 60° dispersion angle misting nozzle, onto both the central and upper portion of a cone-shaped decompression tank, with its base turned upside down; part of the gases that break free from the liquid being treated recirculate inside this tank as they are driven by a turbine that aspirates them through the upper portion of the tank in order to inject them tangentially on the vertex of the internal cone.

2. The process to increase the storage time of liquid raw food according to claim 1, wherein the temperatures at which the liquids can be processed, between 6° C and 50° C, are determined together with the compositions of the gases that will be selected for each process:
a. pure nitrogen, when only the microbial load needs to be reduced, or
b. nitrogen with a carbon content between 1 % and 10% to lower the liquids' enzyme content in the first two steps of the process: - gasification and rest.

3. The process to increase the storage time of liquid raw food according to claim 1 wherein the process is software-controlled, and valves are either pneumatic or electricity-powered and the process works in the following way:
a. the temperature and pressure under which the process is to be conducted,
b. the hold time, and
c. which gas shall be used in the process, pure nitrogen, or which nitrogen-carbon dioxide proportion shall be used,
will be previously defined by the software.

4. The process to increase the storage time of liquid raw food according to the previous claims, wherein a dosing cylinder (CD) aspirates and doses the flow of the liquid being treated, which is in a tank for liquids to be treated (T1) that flow through a valve-controlled (V1) duct (D1), up to a heat exchanger (HE); and wherein the liquid to be treated exits the heat exchanger (HE) through a duct (D2) and, controlled by a valve (V2), it is aspirated by the dosing cylinder (CD) that is driven by a driving cylinder (CA); in addition to providing the dosage, the dosing cylinder (CD) concomitantly aspirates the gases contained inside a nitrogen supply tank (T2) or in a carbon dioxide supply tank (T3), or in both of them, whose gas exhaust for the process flow through ducts (D3) and (D4), respectively, and are controlled by valves (V3) and (V4), respectively, which are connected with a gas feeding duct (D5), from which, controlled by valve (V5), the gas is supplied in a pure or mixed state, and is dosed by the aspiration cycle of the dosing cylinder (CD) that is driven by the driving cylinder (CA); therefore, the liquid to be treated and the gas to be used in the treatment - whether pure nitrogen or a mixture of nitrogen and carbon dioxide with contents ranging from 1 % to 10% by volume - are aspirated and dosed by the dosing cylinder (CD) and then, upon compressing both liquid and gas, sends them through the duct (D6), controlled by valve (V6), to the gasifying compressor (CG); valves (V5) and (V7) shall be closed and valve (V6) shall be open for this operation involving sending the liquid mixture to be treated, along with the process gas, to the gasifying compressor (CG).

5. The process to increase the storage time of liquid raw food according to claim 4, wherein the gasifying compressor (CG) compresses the process mixture of liquid and gas, the gasified liquid exits the gasifying compressor (CG), under the specified pressure for this operation, through the duct (D7), controlled by valve (V7), and heads for the rest tank (T4) where it is to stay for three hundred seconds; wherein the valve (V7) must be opened, and valves (V6) and (V8) must be closed; as the time allowed for the gasified liquid to remain at rest inside the rest tank (T4) comes to an end, and as an internal pressure (T4) reaches the process pressure, valve (V8) opens up and the gasified liquid drains through the duct (D8) and then, controlled by valve (V9), they are injected by the misting nozzle (N) into the cyclone expansion vessel (VEC) in the form of mist and the misting nozzle (N) sprays the liquids in the form of a cone with a 60° opening that is placed on the vessel's central upper portion, where the operational pressure is 0.2 bar.

6. The process to increase the storage time of liquid raw food according to claim 4, wherein a turbine (TU) aspirates the mist and the gases released from the liquid being treated at a cylindrical section (SC) on top of a cyclone expansion vessel (VEC), and injects them into the gases and liquids separator cyclone (C); the gases captured on top of the gases and liquids separator cyclone (C) are then forced by the turbine (TU) into the duct (D10), located right above the internal cone's (CI) vertex, tangentially to the internal wall of the internal cone (CI); from the base of the gases and liquids separator cyclone (C), the liquids that are separated from the process gases flow through duct (D13), controlled by valve (V13), to the processed products tank (T5); part of the liquids being processed that, due to the cyclone gases that are formed inside the cyclone expansion vessel (VEC), are thrown against the walls of the cylindrical section (SC) of said vessel, drain through the space (E) between the internal walls of the cyclone expansion vessel (VEC) and the external cone (CI), and then exit the vessel through the duct (D12) placed on the vertex of the internal walls' cone that make up the cyclone expansion vessel (VEC), and flow, through valve (V12), to the processed products tank (T5) with its refrigerator device (RE) inside.

7. The process to increase the storage time of liquid raw food according to claim 1 wherein the gases insufflated in the liquids being treated recirculate in the process through two circuits:
a. process gases that were separated from the liquid and exited from the top of the gases and liquids cyclone separator (C) return to the base of the inner cone (CI) of the cyclone expansion vessel (VEC), powered by the turbine (TU);
b. part of the gases escaping from the gasified liquids are collected at the top of the cyclone expansion vessel (VEC) and return through the vacuum pump (VP) by means of valve (V10) and valve (V11), to duct (D2).

## Patentansprüche

1. Verfahren zur Erhöhung der Lagerzeit von flüssigen unverarbeiteten Lebensmitteln, um eine erhöhte Lagerzeit von flüssigen unverarbeiteten Lebensmitteln zu ermöglichen, wodurch ermöglicht wird, Schwankungen zwischen Anlieferung und kontinuierlicher Verarbeitung solcher Lebensmittel zu beseitigen, die mikrobielle Belastung in flüssigen Lebensmitteln zu verringern und gleichzeitig, wenn gewünscht, den Enzymgehalt in dieser Flüssigkeit weiter zu reduzieren, **gekennzeichnet durch** Vergasung der flüssigen Lebensmittel und anschließende sofortige Dekompression, worin das Verfahren bei Temperaturen im Bereich von 6 °C bis 50 °C durchgeführt wird und **dadurch, dass** das Verfahren drei aufeinanderfolgende Schritte umfasst:
a. einem ersten Schritt, bestehend aus der Vergasung der flüssigen Lebensmittel unter Temperaturen von 6 °C bis 50 °C, der Verdichtung mit Stickstoff oder mit einem Stickstoff-/Kohlendioxidgemisch >das Gemisch ist Stickstoff mit einem Kohlendioxidgehalt zwischen 1 und 10 Vol.-% unter Drücken von 250 bis 500 bar;
b. einem zweiten Schritt, bestehend daraus, die so vergasten Flüssigkeiten mindestens 300 Sekunden lang unter einem gegebenen Druck, zwischen 250 bar und 500 bar in Tanks ruhen zu lassen;
und
c. einem dritten Schritt, bestehend daraus, diese Flüssigkeit, nun als Nebel, in einen Zustand zu versetzen, der mit einer 60°-Dispersionswinkel-Nebeldüse erreicht wird, sowohl auf dem mittleren als auch auf dem oberen Abschnitt eines kegelförmigen Dekompressionsbehälters, dessen Basis auf den Kopf gestellt ist; ein Teil der Gase, die sich von der zu behandelnden Flüssigkeit lösen, zirkulieren innerhalb dieses Behälters, während sie von einer Turbine angetrieben werden, die sie durch den oberen Abschnitt des Behälters ansaugt, um sie tangential an der Spitze des inneren Kegels zu injizieren.

2. Verfahren zur Erhöhung der Lagerzeit von flüssigen unverarbeiteten Lebensmitteln nach Anspruch 1, worin die Temperaturen, bei denen die Flüssigkeiten verarbeitet werden können, zwischen 6 °C und 50 °C zusammen mit den Zusammensetzungen der Gase bestimmt werden, die für jedes Verfahren ausgewählt werden:
a. reiner Stickstoff, wenn nur die mikrobielle Belastung reduziert werden muss, oder
b. Stickstoff mit einem Kohlenstoffgehalt zwischen 1 % und 10 %, um den Enzymgehalt der Flüssigkeiten in den ersten beiden Stufen des Verfahrens zu senken: - Vergasung und Ruhen.

3. Verfahren zur Erhöhung der Lagerzeit von flüssigen unverarbeiteten Lebensmitteln nach Anspruch 1, worin das Verfahren softwaregesteuert ist und Ventile entweder pneumatisch oder elektrisch angetrieben werden, und das Verfahren wie folgt funktioniert:
a. Temperatur und Druck, unter denen das Verfahren durchgeführt werden soll,
b. Ruhezeit und
c. welches Gas bei dem Verfahren verwendet werden soll, reiner Stickstoff oder welches Stickstoff-Kohlendioxid-Verhältnis verwendet werden soll, wird zuvor von der Software definiert.

4. Verfahren zur Erhöhung der Lagerzeit von flüssigen unverarbeiteten Lebensmitteln nach den vorhergehenden Ansprüchen, worin ein Dosierzylinder (CD) den Strom der zu behandelnden Flüssigkeit ansaugt und dosiert, der sich in einem Tank für zu behandelnde Flüssigkeiten (T1) befindet, die durch einen ventilgesteuerten (V1) Kanal (D1) zu einem Wärmetauscher (HE) strömen; und worin die zu behandelnde Flüssigkeit den Wärmetauscher (HE) durch einen Kanal (D2) verlässt und, gesteuert durch ein Ventil (V2), von dem Dosierzylinder (CD) angesaugt wird, der durch einen Antriebszylinder (CA) angetrieben wird; zusätzlich zur Bereitstellung der Dosierung saugt der Dosierzylinder (CD) gleichzeitig die in einem Stickstoffvorratstank (T2) oder in einem Kohlendioxidvorratstank (T3) oder in beiden enthaltenen Gase an, deren Gasabzug für das Verfahren durch die Kanäle (D3) bzw. (D4) fließt, und werden durch Ventile (V3) bzw. (V4) gesteuert, die mit einem Gaszufuhrkanal (D5) verbunden sind, von dem aus, gesteuert durch das Ventil (V5), das Gas in einem reinen oder gemischten Zustand zugeführt und durch den Ansaugzyklus des Dosierzylinders (CD) dosiert wird, der durch den Antriebszylinder (CA) angetrieben wird. Dafür werden die zu behandelnde Flüssigkeit und das bei der Behandlung zu verwendende Gas - ob reiner Stickstoff oder ein Gemisch aus Stickstoff und Kohlendioxid mit Gehalten von 1 Vol.-% bis 10 Vol.-% - vom Dosierzylinder (CD) angesaugt und dosiert und beim Verdichten von Flüssigkeit und Gas durch den vom Ventil (V6) gesteuerten Kanal (D6) zum Vergasungsverdichter (CG) geleitet; die Ventile (V5) und (V7) müssen geschlossen und das Ventil (V6) geöffnet sein, worin das zu behandelnde Flüssigkeitsgemisch zusammen mit dem Prozessgas an den vergasenden Verdichter (CG) geleitet wird.

5. Verfahren zur Erhöhung der Lagerzeit von flüssigen unverarbeiteten Lebensmitteln nach Anspruch 4, worin der Vergasungsverdichter (CG) das Prozessgemisch aus Flüssigkeit und Gas verdichtet, die vergaste Flüssigkeit den Vergasungsverdichter (CG) unter dem für diesen Vorgang angegebenen Druck durch den vom Ventil (V7) gesteuerten Kanal (D7) und die Köpfe für den Ruhetank (T4) verlässt, wo sie dreihundert Sekunden lang ruhen soll; worin das Ventil (V7) geöffnet werden muss und die Ventile (V6) und (V8) geschlossen werden müssen; wenn die Zeit, in der die vergaste Flüssigkeit im Ruhetank (T4) im Ruhezustand verbleiben kann, abgelaufen ist; und ein Innendruck (T4) den Prozessdruck erreicht, öffnet sich das Ventil (V8) und die vergaste Flüssigkeit läuft durch den Kanal (D8) und wird dann, durch das Ventil (V9) gesteuert, von der Nebeldüse (N) in Form von Nebel in das Zyklonausdehnungsgefäß (VEC) eingespritzt und die Nebeldüse (N) spritzt die Flüssigkeiten in Form eines Kegels mit einer 60°-Öffnung, der auf den mittleren oberen Teil des Gefäßes aufgesetzt wird, wo der Betriebsdruck 0,2 bar beträgt.

6. Verfahren zur Erhöhung der Lagerzeit von flüssigen unverarbeiteten Lebensmitteln nach Anspruch 4, worin eine Turbine (TU) den Nebel und die aus der zu behandelnden Flüssigkeit freigesetzten Gase an einem zylindrischen Abschnitt (SC) auf einem Zyklonausdehnungsgefäß (VEC) ansaugt und in den Gas- und Flüssigkeitsabscheiderzyklon (C) einleitet; die auf dem Zyklon (C) des Gas- und Flüssigkeitsabscheiders gefangenen Gase werden dann von der Turbine (TU) in den Kanal (D10) gedrückt, der sich direkt über dem Scheitelpunkt des Innenkegels (CI) befindet, tangential zur Innenwand des Innenkegels (CI); von der Basis des Zyklons auf dem Gas- und Flüssigkeitsabscheider (C) strömen die von den Prozessgasen getrennten Flüssigkeiten durch den Kanal (D13), gesteuert durch das Ventil (V13), zum Tank (T5) der verarbeiteten Produkte; einen Teil der zu verarbeitenden Flüssigkeiten, die aufgrund der Zyklongase, die sich innerhalb des Zyklonausdehnungsgefäßes (VEC) bilden, gegen die Wände des zylindrischen Abschnitts (SC) des Gefäßes geworfen werden, durch den Raum (E) zwischen den Innenwänden des Zyklonausdehnungsgefäßes (VEC) und dem Außenkegel (CI) entwässern, und dann das Gefäß durch den Kanal (D12) verlassen, der auf der Spitze des Kegels der Innenwände des Zyklonausdehnungsgefäßes (VEC) angeordnet ist, und durch das Ventil (V12) zum Tank für verarbeitete Produkte (T5) mit seiner Kühlvorrichtung (RE) im Inneren strömen.

7. Verfahren zur Erhöhung der Lagerzeit von flüssigen unverarbeiteten Lebensmitteln nach Anspruch 1, worin die in den zu behandelnden Flüssigkeiten isolierten Gase während des Verfahrens durch zwei Kreisläufe rezirkulieren:
a. Prozessgase, die von der Flüssigkeit getrennt und von der Oberseite des Gas- und Flüssigkeitszyklonabscheiders (C) abgegeben wurden, kehren zum Boden des Innenkegels (CI) des Zyklonausdehnungsgefäßes (VEC) zurück, angetrieben von der Turbine (TU);
b. ein Teil der aus den vergasten Flüssigkeiten austretenden Gase wird oben im Zyklonausdehnungsgefäß (VEC) gesammelt und über Ventil (V10) und Ventil (V11) durch die Vakuumpumpe (VP) in den Kanal (D2) zurückgeführt.

## Revendications

1. Processus pour augmenter le temps de stockage d'aliments crus liquides afin de permettre un temps de stockage accru d'aliments crus liquides, permettant ainsi d'éliminer les fluctuations entre l'approvisionnement et le traitement continu de ces aliments, de diminuer la charge microbienne dans les aliments liquides et, en même temps, si on le désire, il permet en outre de réduire la teneur enzymatique dans ledit liquide, **caractérisé par** la gazéification des aliments liquides et ensuite par une compression immédiate, le processus étant conduit sous des températures comprises entre 6° C et 50° C et aussi par le fait que le processus comprend trois étapes successives :
a. la première étape consiste à gazéifier l'aliment liquide, à des températures comprises entre 6° C et 50° C, en le comprimant avec de l'azote ou avec un mélange d'azote et de dioxyde de carbone, le mélange étant de l'azote ayant une teneur en dioxyde de carbone comprise entre 1 % et 10 % en volume, sous des pressions allant de 250 bar à 500 bar ;
b. la deuxième étape consiste à laisser reposer le liquide ainsi gazéifié dans des réservoirs, sous une pression donnée comprise entre 250 bars et 500 bars pendant au moins 300 secondes ;
et
c. la troisième étape consiste à verser ce liquide, maintenant sous forme de brumisation, un état réalisé à l'aide d'une buse de brumisation à angle de dispersion de 60°, sur la partie centrale et supérieure d'un réservoir de décompression conique, avec sa base renversée ; une partie des gaz qui se détachent du liquide traité circulent dans ce réservoir lorsqu'ils sont aspirés par une turbine qui les entraîne par une partie supérieure du réservoir afin de les injecter tangentiellement sur le sommet du cône interne.

2. Processus pour augmenter le temps de stockage d'aliments crus liquides selon la revendication 1, dans lequel les températures auxquelles les liquides peuvent être traités, entre 6° C et 50° C, sont déterminées avec les compositions des gaz qui seront choisis pour chaque processus :
a. azote pur, lorsque seule la charge microbienne doit être réduite, ou
b. de l'azote ayant une teneur en carbone comprise entre 1 % et 10 % pour abaisser la teneur en enzymes des liquides dans les deux premières étapes du processus : - gazéification et repos.

3. Processus pour augmenter le temps de stockage d'aliments crus liquides selon la revendication 1, dans lequel le processus est commandé par logiciel et les soupapes sont actionnées soit pneumatiquement, soit électriquement et le processus fonctionne de la manière suivante :
a. la température et la pression sous lesquelles le processus doit se dérouler,
b. le temps de maintien, et
c. quel gaz doit être utilisé dans le processus, l'azote pur, ou quelle proportion de dioxyde de carbone d'azote doit être utilisée, sera préalablement défini par le logiciel.

4. Processus pour augmenter le temps de stockage d'aliments crus liquides selon les revendications précédentes, dans lequel un cylindre doseur (CD) aspire et dose le flux du liquide à traiter, qui se trouve dans un réservoir pour les liquides à traiter (T1) qui s'écoulent à travers un conduit (D1) commandé par soupape (V1) jusqu'à un échangeur thermique (HE) ; et dans lequel le liquide à traiter quitte l'échangeur thermique (HE) par un conduit (D2) et, contrôlé par soupape (V2), il est aspiré par le cylindre de dosage (CD) qui est entraîné par un cylindre d'entraînement (CA) ; en plus du dosage, le cylindre de dosage (CD) aspire simultanément les gaz contenus dans un réservoir d'alimentation en azote (T2) ou dans un réservoir de gaz carbonique (T3), ou dans les deux, dont les gaz d'échappement pour le processus s'écoulent respectivement par des conduits (D3) et (D4) et sont commandés par des soupapes (V3) et (V4), qui sont reliées à un conduit d'alimentation en gaz (D5), à partir duquel, commandé par la soupape (V5), le gaz est amené pur ou mixte et qui est commandé par le cylindre doseur (CD) qui est commandé par le cylindre moteur, en vue du cycle d'aspiration (CA); par conséquent, le liquide à traiter et le gaz à utiliser dans le traitement - qu'il s'agisse d'azote pur ou d'un mélange d'azote et de dioxyde de carbone avec des teneurs allant de 1 % à 10 % en volume - sont aspirés et dosés par le cylindre doseur (CD), puis, après compression du liquide et du gaz, les envoie par le conduit (D6), commandé par la soupape (V6), au compresseur gazifiant (CG) ; les soupapes (V5) et (V7) doivent être fermées et la soupape (V6) doit être ouverte pour cette opération qui consiste à envoyer le mélange liquide à traiter, ainsi que le gaz de traitement, au compresseur de gazéification (CG).

5. Processus pour augmenter le temps de stockage d'aliments crus liquides selon la revendication 4, dans lequel le compresseur de gazéification (CG) comprime le mélange de traitement de liquide et du gaz, le liquide gazéifié sort du compresseur de gazéification (CG), sous la pression spécifiée pour cette opération, par le conduit (D7), commandé par la soupape (V7), et se dirige vers le réservoir de repos (T4) où il doit rester pendant trois cents secondes ; où la soupape (V7) doit être ouverte, et les soupapes (V6) et (V8) doivent être fermées ; comme le temps imparti pour que le liquide gazéifié reste au repos dans le réservoir de repos (T4) se termine, et lorsqu'une pression interne (T4) atteint la pression de traitement, la soupape (V8) s'ouvre et le liquide gazéifié s'écoule à travers le conduit (08), puis, commandé par la soupape (V9), il est injecté par la buse de brumisation (N) sous forme de brouillard dans la vase de détente (VEC) et la buse de brumisation (N) vaporise les liquides en formant une pointe avec un orifice à 60° placé sur le tronçon supérieur central du réservoir, la pression opérationnelle étant alors 0.2 bar.

6. Processus pour augmenter le temps de stockage d'aliments crus liquides selon la revendication 4, dans lequel une turbine (TU) aspire la brumisation et les gaz libérés du liquide étant traités sur une section cylindrique (SC) sur un récipient de détente (VEC) cyclone, et les injecte dans le cyclone (C) de séparation de gaz et liquides ; les gaz capturés sur le cyclone (C) de séparation des gaz et liquides sont ensuite poussés dans la gaine (010) par la turbine (TU), situé juste au-dessus du sommet du cône interne (Cl), tangentiellement à la paroi interne du cône interne (Cl) ; à partir de la base du cyclone séparateur de gaz et de liquides (C), les liquides qui sont séparés des gaz de processus s'écoulent par le conduit (013), contrôlé par soupape (V13), au réservoir de produits transformés (T5) ; une partie des liquides à traiter qui, en raison des gaz cycloniques qui se forment à l'intérieur du vase d'expansion cyclonique (VEC), sont projetés contre les parois de la section cylindrique (SC) dudit vase, s'écoulent dans l'espace (E) entre les parois internes du vase d'expansion cyclonique (VEC) et le cône externe (Cl), et ensuite ressortir de la cuve par le conduit (D12) placé sur le sommet du cône des parois internes qui composent le vase d'expansion cyclonique (VEC), et s'écouler, à travers la soupape (V12), vers le réservoir (T5) de produits transformés avec son dispositif réfrigérant (RE) intérieur.

7. Processus pour augmenter le temps de stockage d'aliments crus liquides selon la revendication 1, dans lequel les gaz insufflés dans les liquides à traiter recirculent dans le traitement par deux circuits :
a. les gaz issus du processus qui ont été séparés du liquide et évacués par le haut du séparateur à cyclone (C) retournent à la base du cône intérieur (Cl) du vase d'expansion à cyclone (VEC), alimenté par la turbine (TU) ;
b. une partie des gaz s'échappant des liquides gazéifiés est recueillie au sommet du vase d'expansion cyclonique (VEC) et retournée par la pompe à vide (VP) au moyen de la soupape (V10) et de la soupape (V11), dans le conduit (D2).
